# EUROPEAN PATENT SPECIFICATION

(11) **EP 2 836 785 B1**
(45) Date of publication and mention of the grant of the patent: **05.10.2022**
(21) Application number: 13718458.6
(22) Date of filing: 12.04.2013
(51) Int. Cl.: F28F 21/08, F28D 1/04, C22C 21/00, C22C 21/06, C22C 21/10, F28F 1/24, B32B 15/01, C22C 1/00, C22C 1/06, F28F 19/00

(54) **ALUMINUM ALLOY TUBE-FIN HEAT EXCHANGER**
LAMELLENWÄRMETAUSCHER AUS EINER ALUMINIUMLEGIERUNG
ÉCHANGEUR DE CHALEUR À AILETTE DE TUBE EN ALLIAGE D'ALUMINIUM

(30) Priority: 12.04.2012 US 201261623386 P
(43) Date of publication of application: 18.02.2015
(73) Proprietor: Carrier Corporation, Farmington, CT 06034 (US)
(72) Inventor: HUANG, Ruoshuang, Farmington, Connecticut 06034 (US); LOMBARDO, Mary Teresa, Farmington, Connecticut 06034 (US)
(74) Representative: Schmitt-Nilson Schraud Waibel Wohlfrom Patentanwälte Partnerschaft mbB
(86) International application number: PCT/US2013/036324
(87) International publication number: WO 2013/155384

(56) References cited:
- WO-A2-2012/018536
- DE-A1- 3 139 154
- US-A- 4 749 627
- US-A- 5 518 070
- US-A- 5 732 767
- US-A1- 2008 041 571
- US-A1- 2008 190 403

## Description

### BACKGROUND OF THE INVENTION

The subject matter disclosed herein generally relates to heat exchangers and, more particularly, to heat exchangers having alloy tubes and aluminum collar-style fins tubes.

Heat exchangers are widely used in various applications, including but not limited to heating and cooling systems including hydronic fan coil units, heating and cooling in various industrial and chemical processes, heat recovery systems, and the like, to name but a few. Many heat exchangers for transferring heat from one fluid to another fluid utilize one or more tubes through which one fluid flows while a second fluid flows around the tubes. Heat from one of the fluids is transferred to the other fluid by conduction through the tube wall. Many configurations also utilize fins in thermally conductive contact with the outside of the tube(s) to provide increased surface area across which heat can be transferred between the fluids and/or to impact flow of the second fluid through the heat exchanger. One such heat exchanger is known as a round tube plate fin (RTPF) heat exchanger.

Heat exchanger tubes may be made from a variety of materials, including metals such as aluminum or copper and alloys thereof. Aluminum alloys are lightweight, have a high specific strength and high-heat conductivity. Due to these excellent mechanical properties, aluminum alloys are used as heat exchangers for heating or cooling systems in commercial, industrial, residential, transport, refrigeration, and marine applications. However, aluminum alloy heat exchangers have a relatively high susceptibility to corrosion. Corrosion eventually leads to a loss of refrigerant from the tubes and failure of the heating or cooling system. Sudden tube failure results in a rapid loss of cooling and loss of functionality of the heating or cooling system. Accordingly, improvements in corrosion performance of aluminum alloy heat exchangers would be well received in the art.

WO 2012/018536 A2 discloses a heat exchanger comprising a tube comprising a first aluminum alloy; and a plurality of fins in thermally conductive contact with the exterior of said tube, said fins comprising a second aluminum alloy, the second aluminum alloy being AA1100 or AA7072 aluminum alloy.

US 5, 518, 070 A discloses heat exchangers having tubes made from aluminum alloys and fins made from aluminum alloys, wherein the aluminum alloys of the fins comprise more than 1 wt% Zn.

DE 31 39 154 A1 discloses heat exchangers having tubes formed from an aluminum alloy, for example AA3003 aluminum alloy, and fins consisting at least partially of an aluminum alloy having a lower electrochemical potential than the aluminum alloy forming the tubes, in order to achieve sacrificial corrosion of the fins. The aluminum alloys forming the fins may comprise up to 1.0 wt% Zn.

US 4, 749,627 A discloses heat exchangers with tubes made from an aluminum alloy, for example AA3003 aluminum alloy, and fins made from an aluminum alloy having a lower electrochemical potential than the aluminum alloy forming the tubes. The fin alloys comprise zinc, for example from 0.05 to 1.0 wt% Zn.

Documents US 5 732 767 A, US 2008/190403 A1 and US 2008/041571 A1 also disclose such heat exchangers.

### BRIEF DESCRIPTION OF THE INVENTION

According to one aspect of the invention, a heat exchanger includes a tube comprising a first aluminum alloy; and a plurality of fins in thermally conductive contact with the exterior of the tube, said fins formed from a second aluminum alloy comprising a base alloy selected from the group consisting of AA1100, AA8006, and AA8011 and zinc or magnesium in an amount sufficient to provide the second aluminum alloy with an electrochemical solution potential of at least 10 mV more negative than the electrochemical solution potential of the first aluminum alloy, as determined according to ASTM G69-97.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 depicts a perspective view of a heat exchanger incorporating heat exchanger fins treated according to an embodiment of the invention;
FIG. 2 depicts a sectional view of the tube and fins incorporating the treated heat exchanger fins according to an embodiment of the invention; and
FIG. 3 is a plot of galvanic corrosion current density for exemplary tube and fin alloys according to an embodiment of the invention.

### DETAILED DESCRIPTION OF THE INVENTION

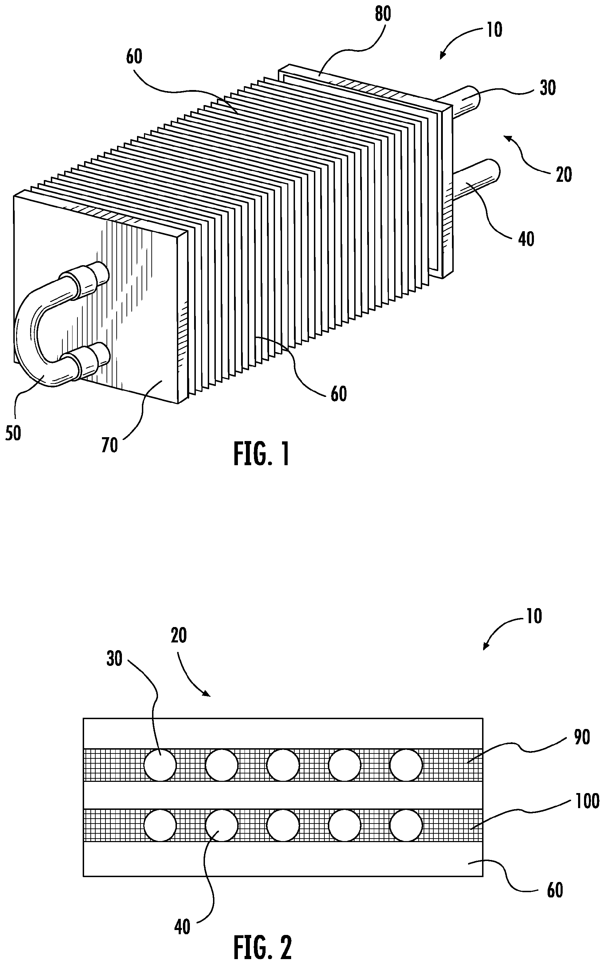

Referring now to the drawings, FIG. 1 depicts an exemplary RTPF heat exchanger 10 having heat exchanger fins 60 that are treated for galvanic corrosion protection according to an embodiment of the invention. Particularly, the heat exchanger 10 includes one or more flow circuits for carrying refrigerant through the heat exchanger 10. For the purposes of explanation, the heat exchanger 10 is shown with a single flow circuit refrigerant tube 20 consisting of an inlet line 30 and an outlet line 40. The inlet line 30 is connected to the outlet line 40 at one end of the heat exchanger 10 through a 90 degree tube bend 50. It should be evident, however, that more circuits may be added to the unit depending upon the demands of the system. The refrigerant tube 20 is generally made of an aluminum alloy based core material. The heat exchanger 10 further includes a series of fins 60 comprising radially disposed plate like elements spaced along the length of the flow circuit. The fins 60 are provided between a pair of end plates 70 and 80 and are supported by the lines 30, 40 in order to define a gas flow passage through which conditioned air passes over the refrigerant tube 20 and between the spaced fins 60. Also, in some embodiments, the fins 60 are generally made of an aluminum alloy substrate material such as, for example, materials selected from the 1000 series, 7000 series, or 8000 series aluminum alloys.

FIG. 2 depicts a sectional view of the heat exchanger 10 including the refrigerant tube 20 and fins 60 according to an embodiment of the invention. In a typical arrangement, as shown in FIG. 2, an aluminum alloy refrigerant tube 20 with the circuit flow lines 30, 40 are fabricated with the generally coplanar aluminum alloy plates for the heat exchanger fins 60. The attachment point of the fins 60 and lines 30, 40 are brazed to form a permanent connection.

The first aluminum alloy as described herein is used to form tubes for the tube fin heat exchanger. The first aluminum alloy can be selected from any of a number of known and commercially available aluminum alloys having an electrochemical solution potential of -695 mV to -770 mV as determined according to ASTM G69-97, more specifically -710 mV to -750 mV. Representative alloys that can be used as the first aluminum alloy include, but are not limited to alloys of the 3000 series as well as other alloy series such as the 1000 series, 5000 series. Exemplary alloys include 3003 and 3102.

The second aluminum alloy described herein is used to prepare finstock for the fabrication of fins. The second aluminum alloy comprises a base alloy selected from the group consisting of can be selected from AA1100, AA8006, and AA8011, and mixtures thereof. The compositions of these alloys and techniques for preparing them are well-known in the art. Exemplary embodiments of such compositions are described, for example, in Aluminum and Aluminum Alloys, ASM Specialty Handbook, J.R. Davis, ASM International, the disclosure of which is incorporated herein by reference in its entirety. The fin alloy comprises zinc or magnesium in an amount sufficient to provide the second aluminum alloy with an electrochemical solution potential of at least 10 mV more negative than the electrochemical solution potential of the tube alloy, as determined according to ASTM G69. In a more specific exemplary embodiment, zinc or magnesium is present in an amount sufficient to provide the second aluminum alloy with an electrochemical solution potential of at least 40 mV more negative than the electrochemical solution potential of the tube alloy. In exemplary embodiments, zinc or magnesium can be included at a level of 0.1 to 10 wt.% zinc or magnesium, more specifically 0.25 to 8 wt.% zinc or magnesium, and even more specifically 0.7 to 8 wt.% zinc or magnesium. In other exemplary embodiments, the second aluminum alloy comprises 0.15 to 4 wt.% zinc, more specifically from 0.25 to 3 wt.% zinc, and even more specifically 0.7 to 1.5 wt.% zinc.

In another embodiment, the second aluminum alloy that includes a Zn or magnesium can be formed by melting the base alloy in a crucible and adding Zn or Mg as compact pieces of high purity Zn or Mg when the melt temperature is high enough to melt and mix with the Zn or Mg (e.g., 1300 degrees Fahrenheit for Zn). The melt is cured using rapid solidification and thin sheets of fins 60 are formed by rolling. In one exemplary embodiment, cured fins 60 comprise mostly aluminum and preferably, Zn material in an amount up to about 1 percent Zn by weight. In other embodiments, the Zn material has a coating thickness of about 1 micron to about 10 micron.

The embodiments described herein utilize an aluminum alloy for the fins of a tube fin heat exchanger having an aluminum alloy tube, i.e., a so-called "all aluminum" heat exchanger. For such heat exchangers, the alloy out of which the fins are made should be more anodic than the alloy out of which the tube(s) are made. This ensures that any galvanic corrosion will occur in the fin rather than in the tube, as tube corrosion can cause a potentially catastrophic failure involving loss of refrigerant. Conventional anodic aluminum alloys such as alloy 7072 suffer from limitations on formability, which is particularly problematic for heat exchangers having low fpi (fins per inch) counts, with correspondingly high collar dimensions. For some heat exchanger designs with lower fpi counts, 7072 fins are subject to cracking and other defects at lower fpi counts due to 7072's limited formability. For such designs, 7072 is limited in the minimum fpi count that can be achieved.

The invention is further described by the following non-limiting examples.

### Example 1

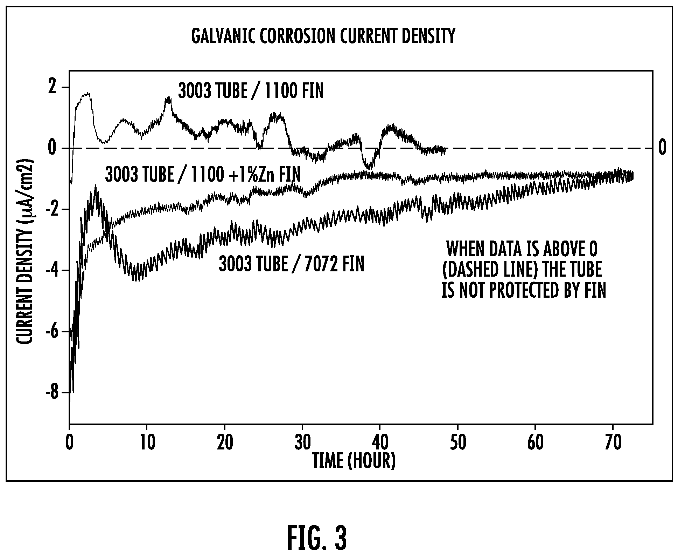

Aluminum alloy for use as a fin material was prepared by modifying alloy 1100 with the addition of 1.0 wt.% zinc. The resulting alloy was evaluated for galvanic compatibility with tube alloy 3003 according to ASTM G71-81. The evaluation was performed in a galvanic corrosion test solution such as the solution described in G69-97 or other galvanic corrosion test solutions used to evaluate susceptibility to galvanic corrosion. For comparison purposes, comparison alloy 7072 was also evaluated for galvanic compatibility with tube alloy 3003. The results are shown in FIG. 3, which indicates that both fin alloys are sufficiently anodic with respect to tube alloy 3003 so that any galvanic corrosion in a tube fin heat exchanger would occur in the fin rather than the tube, with 3003 having a solution potential of -742 mV, modified 1100 having a solution potential of -792 mV, and 7072 having a solution potential of -835 mV. Also for comparison purposes, comparison alloy 1100 was also evaluated for galvanic compatibility with tube alloy 3003. The results are shown in FIG. 3, which indicates that the 1100 fin alloy is not sufficiently anodic with respect to the tube alloy 3003. Thus any galvanic corrosion in a tube fin heat exchanger would occur in the tube rather than the fin, with 3003 having a solution potential of -742 mV, and 1100 having a solution potential of -752 mV.

### Example 2

Tube fin heat exchangers were prepared having various tube sizes and fpi/fin collar values using aluminum alloy tubes and collar-type fins prepared from zinc-modified AA1100 according to the invention. The heat exchangers with 7072 exhibited significant splitting of the fins, particularly at lower fpi counts. Exemplary lowest achievable FPI counts at different fin thicknesses are shown in the Table below:

**Table**

| Fin Thickness | Minimum FPI | |
|---|---|---|
| | AA1100 + 1% Zn | AA7072 |
| 0.0035" - 0.004" | 13 - 10 | 20 - 13 |
| 0.005" - 0.006" | 10-6 | 14 - 10 |
| 0.008" - 0.009" | 7-5 | 11-7 |

The heat exchangers of the invention with zinc-modified 1100 fin alloy exhibited no splitting and were capable of achieving lower minimum fpi counts than the comparison of fins made from the 7072 alloy.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A heat exchanger (10), comprising:
a tube (20, 30, 50) comprising a first aluminum alloy; and
a plurality of fins (60) in thermally conductive contact with the exterior of said tube (20, 30, 50), said fins (60) formed from a second aluminum alloy comprising a base alloy selected from the group consisting of AA1100, AA8006, and AA8011 and zinc or magnesium in an amount sufficient to provide said second aluminum alloy with an electrochemical solution potential of at least 10 mV more negative than the electrochemical solution potential of said first aluminum alloy, as determined according to ASTM G69.

2. The heat exchanger (10) of claim 1, wherein the first aluminum alloy has an electrochemical solution potential of -695 mV to -770 mV as determined according to ASTM G69.

3. The heat exchanger (10) of claim 2, wherein the first aluminum alloy has an electrochemical solution potential of -710 mV to -750 mV.

4. The heat exchanger (10) of any of claims 1-3, wherein the second aluminum alloy comprises from 0.1 to 10 wt.% zinc or magnesium.

5. The heat exchanger (10) of claim 4, wherein the second aluminum alloy comprises from 0.25 to 8 wt.% zinc or magnesium.

6. The heat exchanger (10) of claim 4, wherein the second aluminum alloy comprises from 0.7 to 8 wt.% zinc or magnesium.

7. The heat exchanger (10) of claim 4, wherein the second aluminum alloy comprises from 0.15 to 4 wt.% zinc.

8. The heat exchanger (10) of claim 4, wherein the second aluminum alloy comprises from 0.25 to3 wt.% zinc.

9. The heat exchanger (10) of claim 4, wherein the second aluminum alloy comprises from 0.7 to 1.5 wt.% zinc.

10. The heat exchanger (10) of any of claims 1-9, wherein the second aluminum alloy has an electrochemical solution potential of at least 40 mV more negative than the electrochemical solution potential of the first aluminum alloy.

11. The heat exchanger (10) of any of claims 1-10, wherein said base alloy is AA1100.

12. The heat exchanger (10) of any of claims 1-10, wherein said base alloy is AA8006.

13. The heat exchanger (10) of any of claims 1-10, wherein said base alloy is AA8011.

14. The heat exchanger (10) of any of claims 1-13, wherein said first aluminum alloy is AA3003.

## Patentansprüche

1. Wärmetauscher (10), umfassend:
ein Rohr (20, 30, 50), umfassend eine erste Aluminiumlegierung; und
eine Vielzahl von Lamellen (60) in wärmeleitendem Kontakt mit dem Äußeren des Rohrs (20, 30, 50), wobei die Lamellen (60) aus einer zweiten Aluminiumlegierung gebildet sind, umfassend eine Basislegierung, die aus der Gruppe ausgewählt ist, die aus AA1100, AA8006 und AA8011, und Zink oder Magnesium in einer ausreichenden Menge besteht, um die zweite Aluminiumlegierung mit einem elektrochemischen Lösungspotential zu versehen, das mindestens 10 mV negativer ist als das elektrochemische Lösungspotential der ersten Aluminiumlegierung, wie gemäß ASTM G69 bestimmt.

2. Wärmetauscher (10) nach Anspruch 1, wobei die erste Aluminiumlegierung ein elektrochemisches Lösungspotential von -695 mV bis -770 mV, wie gemäß ASTM G69 bestimmt, aufweist.

3. Wärmetauscher (10) nach Anspruch 2, wobei die erste Aluminiumlegierung ein elektrochemisches Lösungspotential von -710 mV bis -750 mV aufweist.

4. Wärmetauscher (10) nach einem der Ansprüche 1-3, wobei die zweite Aluminiumlegierung 0,1 bis 10 Gew.-% Zink oder Magnesium umfasst.

5. Wärmetauscher (10) nach Anspruch 4, wobei die zweite Aluminiumlegierung 0,25 bis 8 Gew.-% Zink oder Magnesium umfasst.

6. Wärmetauscher (10) nach Anspruch 4, wobei die zweite Aluminiumlegierung 0,7 bis 8 Gew.-% Zink oder Magnesium umfasst.

7. Wärmetauscher (10) nach Anspruch 4, wobei die zweite Aluminiumlegierung 0,15 bis 4 Gew.-% Zink umfasst.

8. Wärmetauscher (10) nach Anspruch 4, wobei die zweite Aluminiumlegierung 0,25 bis 3 Gew.-% Zink umfasst.

9. Wärmetauscher (10) nach Anspruch 4, wobei die zweite Aluminiumlegierung 0,7 bis 1,5 Gew.-% Zink umfasst.

10. Wärmetauscher (10) nach einem der Ansprüche 1-9, wobei die zweite Aluminiumlegierung ein elektrochemisches Lösungspotential aufweist, das mindestens 40 mV negativer ist als das elektrochemische Lösungspotential der ersten Aluminiumlegierung.

11. Wärmetauscher (10) nach einem der Ansprüche 1-10, wobei die Basislegierung AA1100 ist.

12. Wärmetauscher (10) nach einem der Ansprüche 1-10, wobei die Basislegierung AA8006 ist.

13. Wärmetauscher (10) nach einem der Ansprüche 1-10, wobei die Basislegierung AA8011 ist.

14. Wärmetauscher (10) nach einem der Ansprüche 1-13, wobei die erste Aluminiumlegierung AA3003 ist.

## Revendications

1. Échangeur de chaleur (10), comprenant :
un tube (20, 30, 50) comprenant un premier alliage d'aluminium ; et
une pluralité d'ailettes (60) en contact thermiquement conducteur avec l'extérieur dudit tube (20, 30, 50), lesdites ailettes (60) étant formées à partir d'un second alliage d'aluminium comprenant un alliage de base choisi dans le groupe constitué de AA1100, AA8006 et AA8011 et du zinc ou du magnésium en une quantité suffisante pour conférer audit second alliage d'aluminium un potentiel de solution électrochimique d'au moins 10 mV plus négatif que le potentiel de solution électrochimique dudit premier alliage d'aluminium, tel que déterminé selon la norme ASTM G69.

2. Échangeur de chaleur (10) selon la revendication 1, dans lequel le premier alliage d'aluminium a un potentiel de solution électrochimique de -695 mV à -770 mV tel que déterminé selon la norme ASTM G69.

3. Échangeur de chaleur (10) selon la revendication 2, dans lequel le premier alliage d'aluminium a un potentiel de solution électrochimique de -710 mV à -750 mV.

4. Échangeur de chaleur (10) selon l'une quelconque des revendications 1 à 3, dans lequel le second alliage d'aluminium comprend de 0,1 à 10 % en poids de zinc ou de magnésium.

5. Échangeur de chaleur (10) selon la revendication 4, dans lequel le second alliage d'aluminium comprend de 0,25 à 8 % en poids de zinc ou de magnésium.

6. Échangeur de chaleur (10) selon la revendication 4, dans lequel le second alliage d'aluminium comprend de 0,7 à 8 % en poids de zinc ou de magnésium.

7. Échangeur de chaleur (10) selon la revendication 4, dans lequel le second alliage d'aluminium comprend de 0,15 à 4 % en poids de zinc.

8. Échangeur de chaleur (10) selon la revendication 4, dans lequel le second alliage d'aluminium comprend de 0,25 à 3 % en poids de zinc.

9. Échangeur de chaleur (10) selon la revendication 4, dans lequel le second alliage d'aluminium comprend de 0,7 à 1,5 % en poids de zinc.

10. Échangeur de chaleur (10) selon l'une quelconque des revendications 1 à 9, dans lequel le second alliage d'aluminium a un potentiel de solution électrochimique d'au moins 40 mV plus négatif que le potentiel de solution électrochimique du premier alliage d'aluminium.

11. Échangeur de chaleur (10) selon l'une quelconque des revendications 1 à 10, dans lequel ledit alliage de base est AA1100.

12. Échangeur de chaleur (10) selon l'une quelconque des revendications 1 à 10, dans lequel ledit alliage de base est AA8006.

13. Échangeur de chaleur (10) selon l'une quelconque des revendications 1 à 10, dans lequel ledit alliage de base est AA8011.

14. Échangeur de chaleur (10) selon l'une quelconque des revendications 1 à 13, dans lequel ledit premier alliage d'aluminium est AA3003.
